# EUROPEAN PATENT APPLICATION

(11) **EP 2 889 755 A2**
(43) Date of publication of application: **01.07.2015**
(21) Application number: 14193276.4
(22) Date of filing: 14.11.2014
(51) Int. Cl.: G06F 9/30

(54) **Systems, apparatuses, and methods for expand and compress**

(30) Priority: 27.12.2013 US 201314142416
(71) Applicant: Intel IP Corporation, Santa Clara, CA 95054 (US)
(72) Inventor: Uliel, Tal, 64362 Tel Aviv, HA (IL); Valentine, Robert, 36054 Kiryat Tivon, HA (IL); Ould-Ahmed-Vall, ElMoustapha, Chandler, AZ Arizona 85226 (US)
(74) Representative: Hufton, David Alan

(57) **Abstract**

Systems, methods, and apparatuses for expanding and compressing vectors is described. In some embodiments, logic is to execute a vector expand (VPEXPANDBIT) instruction determine from each packed data element of the second source operand every bit position that has been set to indicate that a bit of data from a corresponding packed data element of the first source operand is to be written into a corresponding bit position in a packed data element of the destination operand, wherein the bits of data to be written in the destination packed data element are consecutive bits from the packed data element of the first source operand, and store consecutive bit values from each packed data element of the first source at the identified bit positions

## Description

### FIELD OF INVENTION

The field of invention relates generally to computer processor architecture, and, more specifically, to instructions which when executed cause a particular result.

### BACKGROUND

An instruction set, or instruction set architecture (ISA), is the part of the computer architecture related to programming, and may include the native data types, instructions, register architecture, addressing modes, memory architecture, interrupt and exception handling, and external input and output (I/O). It should be noted that the term instruction generally refers herein to a macro-instruction - that is instructions that are provided to the processor for execution - as opposed to micro-instructions or micro-ops - that result from a processor's decoder decoding macro-instructions).

### BRIEF DESCRIPTION OF THE DRAWINGS

The present invention is illustrated by way of example and not limitation in the figures of the accompanying drawings, in which like references indicate similar elements and in which:
**Figures 1**(**A**)-(**B**) illustrates an exemplary execution of the VPEXPANDBIT instruction.
**Figure 2** illustrates an embodiment of the execution of a VPEXPANDBIT instruction in a processor.
**Figure 3** illustrates an embodiment of a method for processing a VPEXPANDBIT instruction.
**Figure 4** illustrates an embodiment of a psuedocode of a VPEXPANDBIT instruction.
**Figures 5**(**A**)-(**B**) illustrates an exemplary execution of the VPCOMPRESSBIT instruction.
**Figure 6** illustrates an embodiment of the execution of a VPCOMPRESSBIT instruction in a processor.
**Figure 7** illustrates an embodiment of a method for processing a VPCOMPRESSBIT instruction.
**Figure 8** illustrates an embodiment of a psuedocode of a VPCOMPRESSBIT instruction.
**Figure 9** is a block diagram of an exemplary embodiment of a processor (processor core) to execute one or more instructions.
**Figure 10** is a block diagram of a register architecture according to one embodiment of the invention.
**Figure 11A** is a block diagram illustrating both an exemplary in-order pipeline and an exemplary register renaming, out-of-order issue/execution pipeline according to embodiments of the invention.
**Figure 11B** is a block diagram illustrating both an exemplary embodiment of an in-order architecture core and an exemplary register renaming, out-of-order issue/execution architecture core to be included in a processor according to embodiments of the invention.
**Figures 12A-B** illustrate a block diagram of a more specific exemplary in-order core architecture, which core would be one of several logic blocks (including other cores of the same type and/or different types) in a chip.
**Figure 13** is a block diagram of a processor that may have more than one core, may have an integrated memory controller, and may have integrated graphics according to embodiments of the invention.
**Figures 14-17** are block diagrams of exemplary computer architectures.
**Figure 18** is a block diagram contrasting the use of a software instruction converter to convert binary instructions in a source instruction set to binary instructions in a target instruction set according to embodiments of the invention.

### DETAILED DESCRIPTION

In the following description, numerous specific details are set forth. However, it is understood that embodiments of the invention may be practiced without these specific details. In other instances, well-known circuits, structures and techniques have not been shown in detail in order not to obscure the understanding of this description.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

### Overview

The instruction set architecture is distinguished from the microarchitecture, which is the internal design of the processor implementing the ISA. Processors with different microarchitectures can share a common instruction set. For example, Intel Pentium 4 processors, Intel Core processors, and Advanced Micro Devices, Inc. of Sunnyvale CA processors implement nearly identical versions of the x86 instruction set (with some extensions having been added to newer versions), but have different internal designs. For example, the same register architecture of the ISA may be implemented in different ways in different micro-architectures using well known techniques, including dedicated physical registers, one or more dynamically allocated physical registers using a register renaming mechanism (e.g., the use of a Register Alias Table (RAT), a Reorder Buffer (ROB) and a retirement register file as described in U.S. Pat. No. 5,446,912; the use of multiple maps and a pool of registers as described in U.S. Pat. No. 5,207,132), etc. Unless otherwise specified, the phrases register architecture, register file, and register refer to that which is visible to the software/programmer and the manner in which instructions specify registers. Where specificity is desired, the adjective logical, architectural, or software visible will be used to indicate registers/files in the register architecture, while different adjectives will be used to designate registers in a given micro-architecture (e.g., physical register, reorder buffer, retirement register, register pool).

An instruction set includes one or more instruction formats. A given instruction format defines various fields (number of bits, location of bits) to specify, among other things, the operation to be performed and the operand(s) on which that operation is to be performed. A given instruction is expressed using a given instruction format and specifies the operation and the operands. An instruction stream is a specific sequence of instructions, where each instruction in the sequence is an occurrence of an instruction in an instruction format.

Scientific, financial, auto-vectorized general purpose, RMS (recognition, mining, and synthesis)/visual and multimedia applications (e.g., 2D/3D graphics, image processing, video compression/decompression, voice recognition algorithms and audio manipulation) often require the same operation to be performed on a large number of data items (referred to as "data parallelism"). Single Instruction Multiple Data (SIMD) refers to a type of instruction that causes a processor to perform the same operation on multiple data items. SIMD technology is especially suited to processors that can logically divide the bits in a register into a number of fixed-sized data elements, each of which represents a separate value. For example, the bits in a 64-bit register may be specified as a source operand to be operated on as four separate 16-bit data elements, each of which represents a separate 16-bit value. As another example, the bits in a 256-bit register may be specified as a source operand to be operated on as four separate 64-bit packed data elements (quad-word (Q) size data elements), eight separate 32-bit packed data elements (double word (D) size data elements), sixteen separate 16-bit packed data elements (word (W) size data elements), or thirty-two separate 8-bit data elements (byte (B) size data elements). This type of data is referred to as the packed data type or vector data type, and operands of this data type are referred to as packed data operands or vector operands. In other words, a packed data item or vector refers to a sequence of packed data elements; and a packed data operand or a vector operand is a source or destination operand of a SIMD instruction (also known as a packed data instruction or a vector instruction).

By way of example, one type of SIMD instruction specifies a single vector operation to be performed on two source vector operands in a vertical fashion to generate a destination vector operand (also referred to as a result vector operand) of the same size, with the same number of data elements, and in the same data element order. The data elements in the source vector operands are referred to as source data elements, while the data elements in the destination vector operand are referred to a destination or result data elements. These source vector operands are of the same size and contain data elements of the same width, and thus they contain the same number of data elements. The source data elements in the same bit positions in the two source vector operands form pairs of data elements (also referred to as corresponding data elements; that is, the data element in data element position 0 of each source operand correspond, the data element in data element position 1 of each source operand correspond, and so on). The operation specified by that SIMD instruction is performed separately on each of these pairs of source data elements to generate a matching number of result data elements, and thus each pair of source data elements has a corresponding result data element. Since the operation is vertical and since the result vector operand is the same size, has the same number of data elements, and the result data elements are stored in the same data element order as the source vector operands, the result data elements are in the same bit positions of the result vector operand as their corresponding pair of source data elements in the source vector operands. In addition to this exemplary type of SIMD instruction, there are a variety of other types of SIMD instructions (e.g., that have only one or has more than two source vector operands; that operate in a horizontal fashion; that generate a result vector operand that is of a different size, that have a different size of data elements, and/or that have a different data element order). It should be understood that the term destination vector operand (or destination operand) is defined as the direct result of performing the operation specified by an instruction, including the storage of that destination operand at a location (be it a register or at a memory address specified by that instruction) so that it may be accessed as a source operand by another instruction (by specification of that same location by the another instruction.

In the description below, there are some items that may need explanation prior to describing the operations of this particular instruction in the instruction set architecture. One such item is called a "writemask register" which is generally used to predicate an operand to conditionally control per-element computational operation (below, the term mask register may also be used and it refers to a writemask register such as the "k" registers discussed below). As used below, a writemask register stores a plurality of bits (16, 32, 64, etc.) wherein each active bit of the writemask register governs the operation/update of a packed data element of a vector register during SIMD processing. Typically, there is more than one writemask register available for use by a processor core.

The instruction set architecture includes at least some SIMD instructions that specify vector operations and that have fields to select source registers and/or destination registers from these vector registers (an exemplary SIMD instruction may specify a vector operation to be performed on the contents of one or more of the vector registers, and the result of that vector operation to be stored in one of the vector registers). Different embodiments of the invention may have different sized vector registers and support more/less/different sized data elements.

The size of the multi-bit data elements specified by a SIMD instruction (e.g., byte, word, double word, quad word) determines the bit locations of the "data element positions" within a vector register, and the size of the vector operand determines the number of data elements. A packed data element refers to the data stored in a particular position. In other words, depending on the size of the data elements in the destination operand and the size of the destination operand (the total number of bits in the destination operand) (or put another way, depending on the size of the destination operand and the number of data elements within the destination operand), the bit locations of the multi-bit data element positions within the resulting vector operand change (e.g., if the destination for the resulting vector operand is a vector register (in this discussion vector registers and packed data element registers are used interchangeably), then the bit locations of the multi-bit data element positions within the destination vector register change). For example, the bit locations of the multi-bit data elements are different between a vector operation that operates on 32-bit data elements (data element position 0 occupies bit locations 31:0, data element position 1 occupies bit locations 63:32, and so on) and a vector operation that operates on 64-bit data elements (data element position 0 occupies bit locations 63:0, data element position 1 occupies bit locations 127:64, and so on).

Additionally, there is a correlation between the number of one active bit vector writemask elements and the vector size and the data element size according to one embodiment of the invention. Vector sizes of 128-bits, 256-bits, and 512-bits are shown, although other widths are also possible. Data element sizes of 8-bit bytes (B), 16-bit words (W), 32-bit doublewords (D) or single precision floating point, and 64-bit quadwords (Q) or double precision floating point are considered, although other widths are also possible. As shown, when the vector size is 128-bits, 16-bits may be used for masking when the vector's data element size is 8-bits, 8-bits may be used for masking when the vector's data element size is 16-bits, 4-bits may be used for masking when the vector's data element size is 32-bits, and 2-bits may be used for masking when the vector's data element size is 64-bits. When the vector size is 256-bits, 32-bits may be used for masking when the packed data element width is 8-bits, 16-bits may be used for masking when the vector's data element size is 16-bits, 8-bits may be used for masking when the vector's data element size is 32-bits, and 4-bits may be used for masking when the vector's data element size is 64-bits. When the vector size is 512-bits, 64-bits may be used for masking when the vector's data element size is 8-bits, 32-bits may be used for masking when the vector's data element size is 16-bits, 16-bits may be used for masking when the vector's data element size is 32-bits, and 8-bits may be used for masking when the vector's data element size is 64-bits.

Depending upon the combination of the vector size and the data element size, either all 64-bits, or only a subset of the 64-bits, may be used as a write mask. Generally, when a single, per-element masking control bit is used, the number of bits in the vector writemask register used for masking (active bits) is equal to the vector size in bits divided by the vector's data element size in bits.

As noted above, writemask registers contain mask bits that correspond to elements in a vector register (or memory location) and track the elements upon which operations should be performed. For this reason, it is desirable to have common operations which replicate similar behavior on these mask bits as for the vector registers and in general allow one to adjust these mask bits within the writemask registers.

Described below are instruction used to accelerate bit compression which is a common bit manipulation operation used in many workloads such as search engine and database applications that compress word elements into smaller bit fields (less than 16 bits) to allow the working set size to fit in memory.

Below are embodiments of an instruction generically called vector compress (VPEXPANDBIT) instruction of the instruction set and embodiments of systems, architectures, instruction formats, etc. The execution of a VPEXPANDBIT by a processor causes a determination from each packed data element of a second source operand every bit position that has been set to indicate that a bit of data from a corresponding packed data element of a first source operand is to be written into a corresponding bit position in a destination packed data element, wherein the bits of data to be written in the destination packed data element are consecutive bits from the packed data element of the first source operand. Generically, a "bit" in this instruction is a sub-element of a packed data operand. Other sub-element sizes may be used such as byte, word, etc.

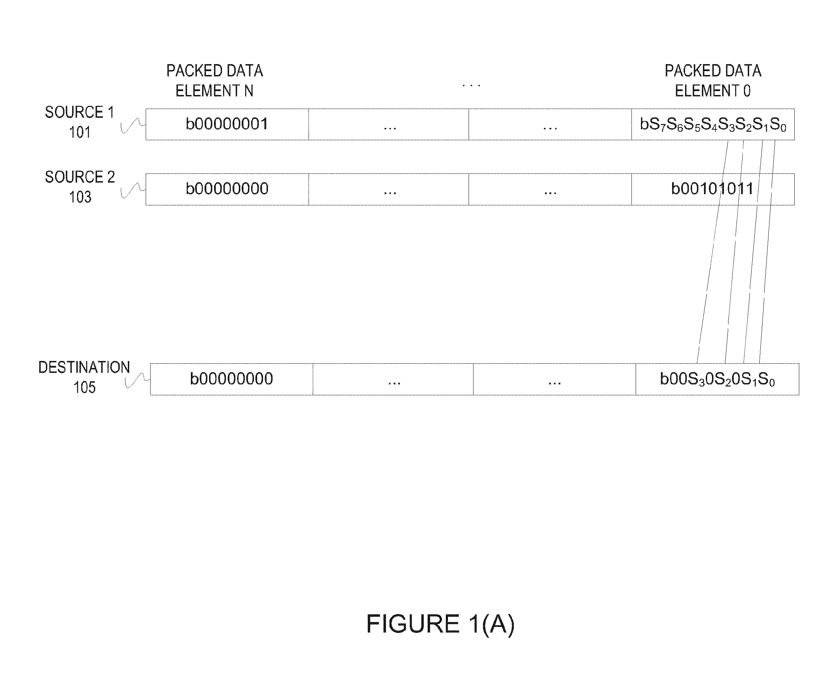

**Figures 1(A)****-(B)** illustrate exemplary execution of the VPEXPANDBIT instruction. **Figure 1(A)** illustrates a VPEXPANDBIT execution where the packed data elements are evaluated. In **Figure 1(A)****,** the a first source 101 and a second source 103 hold packed data values in a plurality of packed data elements (data elements 0 to N). In this example, both of these sources are vector registers with a plurality of packed data elements. However, one or more of these sources may also be a memory location. The packed data elements of each source are of uniform size and are the same size in both sources. For example, the packed data elements may all be of an 8-bit size (or 16- bit, 32- bit, 64- bit, 128- bit, 256-bit, etc.). The size of each source is also the same between the sources. For example, the sources may be of a 512-bit size (or 16- bit, 32- bit, 64- bit, 128- bit, 256-bit, etc.).

Each packed data element of the second source 103 stores data and each bit position of this data determines whether or not data from a corresponding bit position in a corresponding packed data element of the source is to be consecutively written into a corresponding packed data element of the destination beginning. For example, those bit positions set to "1" in the second source mean that corresponding bit positions of the source will be consecutively written to the destination. Of course the convention of using 1 or 0 as the indicator may be different depending upon the implementation. In the illustrated example, bit positions 0, 1,3, and 5 of the second source indicate that the data of these bit positions of the first source 103 will be written consecutively into the packed data element of the destination 105. The data is illustrated as So, S₁, S₂, S₃.

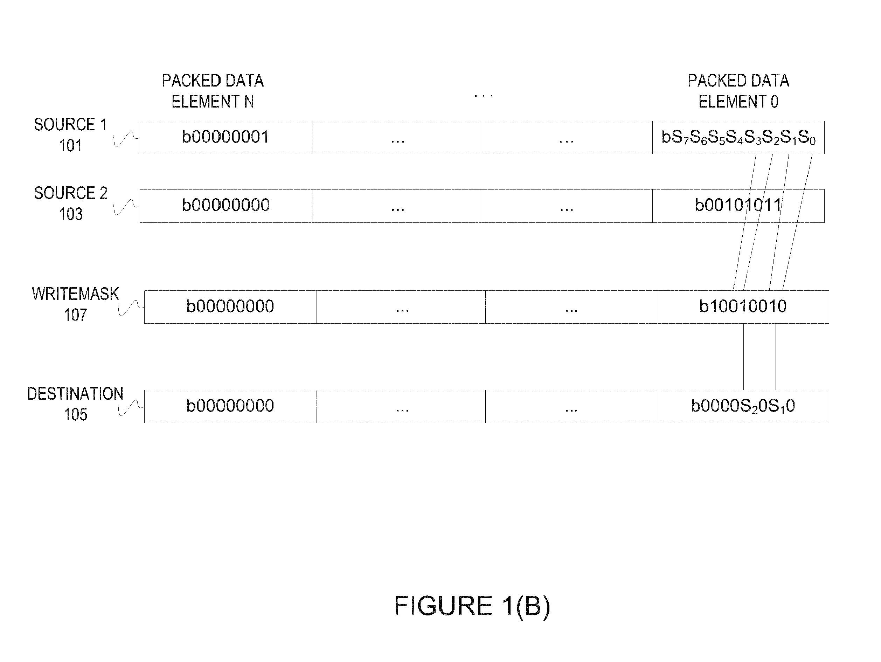

**Figure 1(B)** illustrates a VPEXPANDBIT execution where the packed data elements are evaluated using a writemask. The first source 101 and second source 103 are the same as **Figure 1**(**A**). However, which data bits that are written to the destination 105 are subject to writemask 107. In particular, S₀ and S₃ are not written to the destination 105 as the corresponding writemask value is set to 0 while S₁ and S₂ are written.

### Exemplary Format of VPEXPANDBIT

An exemplary format of this instruction is "VPEXPANDBIT {k} DEST, SOURCE 1, SOURCE 2" where the all of the operands are registers. In most embodiments, the registers are vector registers storing a plurality of packed data operands. These registers may be of any size including, but not limited to, 8-, 16-, 32-, 64-, 128-, 256-, and 512-bit. However, the DEST register is typically smaller than the source registers (8-, 16-, 32-, or 64-bit). Additionally, in some embodiments, one or more of the source operands is a memory location. The opcode (VPEXPANDBIT) may also be used to indicate the size of the of the data elements. For example, VPEXPANDBITB would indicate byte sized packed data elements, etc. K is an optional writemask register to be used for selective writing to the destination. Additionally, when not operating on bit values the opcode will so indicate (e.g., VPEXPANDBYTE, VPEXPANDWORD, etc.)

### Exemplary Methods of Execution of VPEXPANDBIT

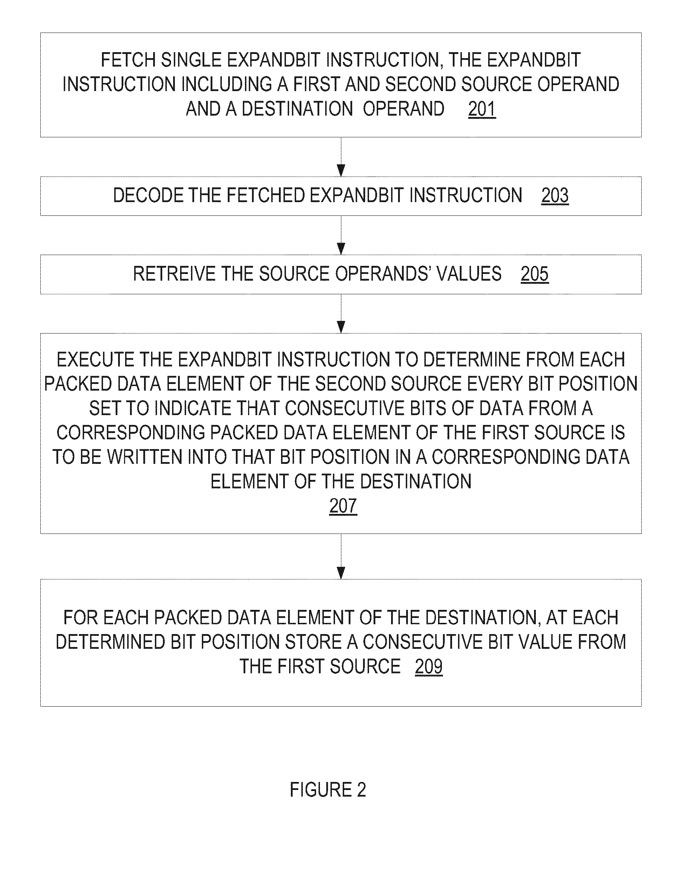

**Figure 2** illustrates an embodiment of the execution of a VPEXPANDBIT instruction in a processor by one or more functional units. While the below is written from the perspective of bit positions, other sizes may be used such as byte, word, doubleword, quadword, etc. as illustrated in **Figure 1(C).** A VPEXPANDBIT instruction with a first and second source operand, a destination register operand, and an opcode is fetched at 201.

The VPEXPANDBIT instruction is decoded by decoding logic at 203.

The source operands' values are retrieved/read at 205. For example, the source registers and/or memory locations are read.

The decoded VPEXPANDBIT instruction (or operations comprising such an instruction such as microoperations) is executed by execution resources such as one or more functional units at 207 to determine from each packed data element of a second source operand every bit position that has been set to indicate that a bit of data from a corresponding packed data element of a first source operand is to be written into a corresponding bit position in a destination packed data element, wherein the bits of data to be written in the destination packed data element are consecutive bits from the packed data element of the first source operand. An example of this was illustrated in **Figure 1****.**

Consecutive least significant data values from each packed data element of the first source are stored at bit positions of a packed data element of the destination identified in the determination step at 209. However, in alternative embodiments, the most significant data values are stored consecutively. This may be performed, for example, by execution logic, writeback logic, etc. In embodiments where a bit is not written, but rather a larger value, then bytes (or word, etc.) are written. Additionally, writemasking may be used to selectively write data.

While 207 and 209 have been illustrated separately, in some embodiments they are performed together as a part of the execution of the instruction.

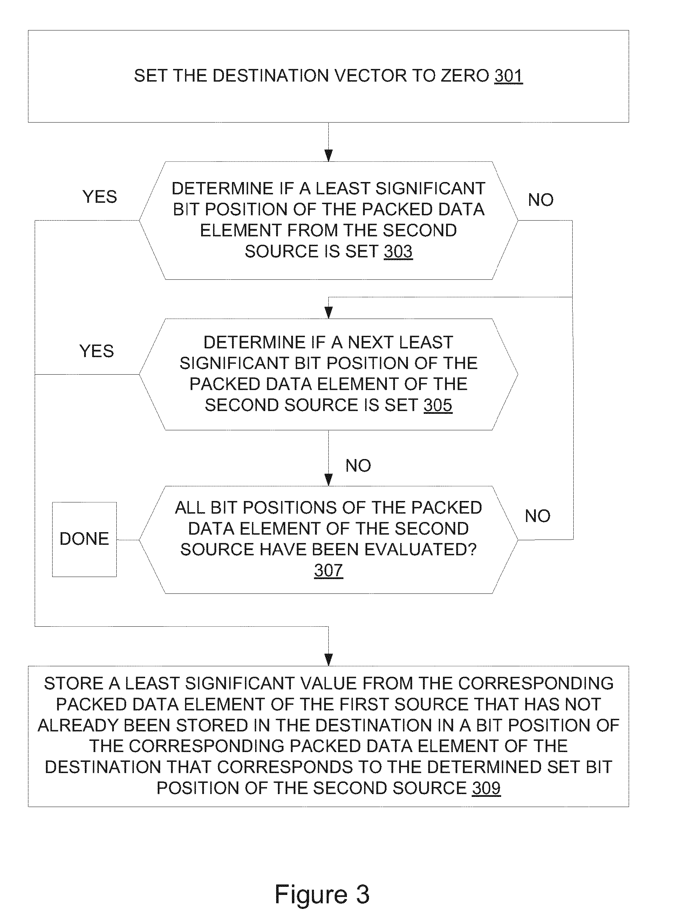

**Figure 3** illustrates an embodiment of a method for processing a VPEXPANDBIT instruction. Again, this is written from the perspective of bit evaluation, however, larger sizes may be used. In this embodiment it is assumed that some, if not all, of the operations 201-205 have been performed earlier, however, they are not shown in order to not obscure the details presented below. For example, the fetching and decoding are not shown, nor is the operand retrieval shown. In this example, only one packed data element is processed for simplicity. In some embodiments, all packed data elements are processed in parallel and in others packed data elements are processed serially.

At 301, the destination is set to zero. In embodiments where the destination is a vector register, the packed data element of the register is set to zero.

At 303, a determination of if a least significant bit position of the packed data element of the second source is set is made. In embodiments, where data elements are processed in a serial fashion, this determination is usually made on the least significant packed data element. Looking back at **Figure 1****,** the least significant bit position (position 0) was set.

When the bit position is not set, a determination of if the next least significant bit position of the packed data element of the second source is set is made at 305. When the bit position is set, in either of 303 and 305, a value from a least significant bit position of the corresponding packed data element of the first source that has not already been stored in the destination is stored in a bit position of the destination that corresponds to the determined set bit position of the second source. For example, in **Figure 1****,** S₀ is stored in the least significant bit position of the packed data element of the destination 105 because that bit position is the least significant bit position set in the corresponding packed data element of the second source and comes from the least significant bit position of the corresponding packed data element of the first source.

A determination of if all of the bit positions of the packed data element of the second source have been evaluated is made at 307. If not, then the determination of 305 is made. If yes, then the method is done. In embodiments where each packed data element is processed serially, the next least significant data element is evaluated until all packed data elements have been evaluated. Of course, in some embodiments, the most significant packed data element is looked at first, etc. In embodiments where each packed data element is evaluated in parallel one or more of 303-309 is performed at the same time.

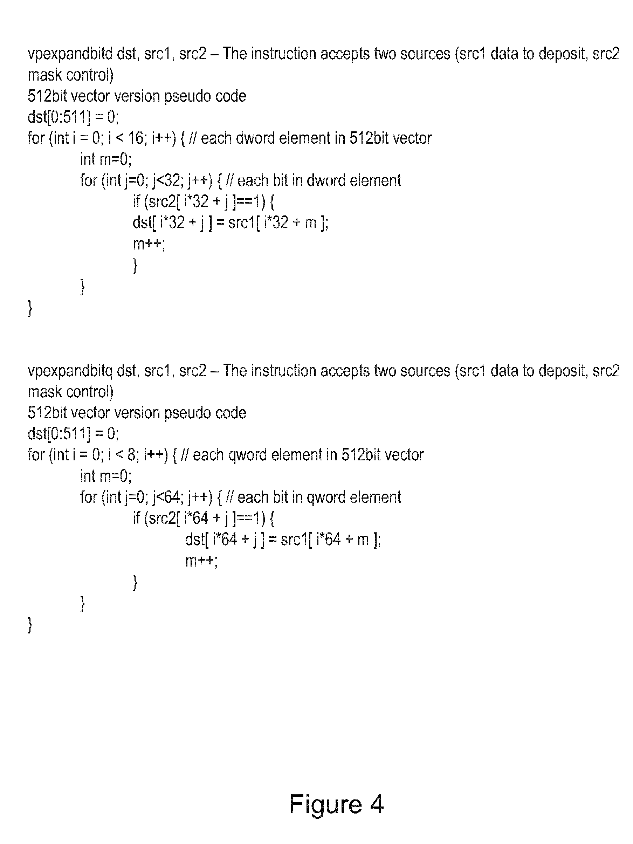

**Figure 4** illustrates exemplary pseudo-code for executing VPEXPANDBIT. While the above has been described with respect to a VPEXPANDBIT instruction, the code sequences above may be performed by multiple instructions in processors that do not support VPEXPANDBIT.

Below are embodiments of an instruction generically called vector expand bit (VPCOMPRESSBIT) instruction of the instruction set and embodiments of systems, architectures, instruction formats, etc. The execution of a VPCOMPRESSBIT by a processor causes a determination from each packed data element of a second source which bit positions are set to indicate that a bit of data from a corresponding bit position in a corresponding packed data element of the first source is to be written consecutively into a corresponding data element of the destination.

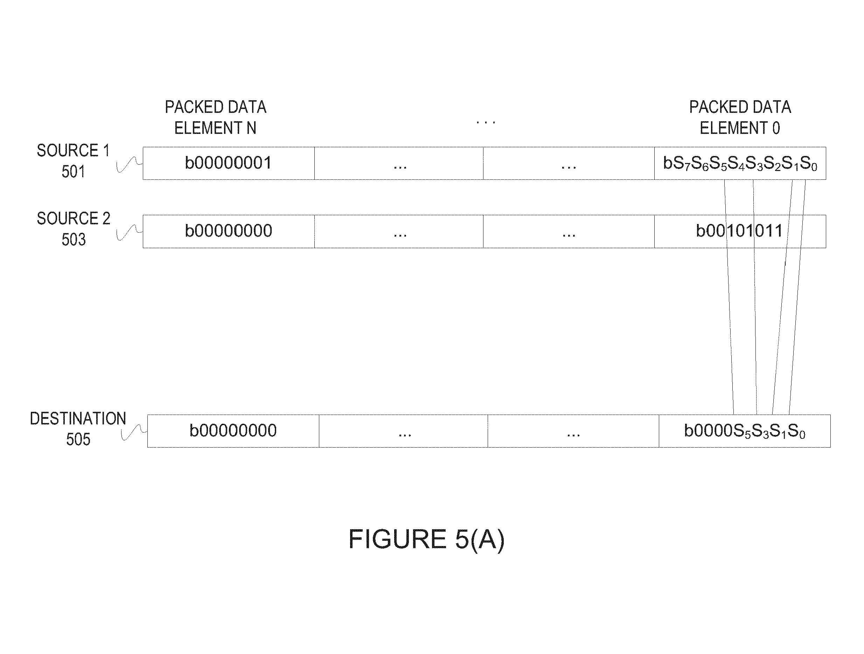

**Figures 5(a)****-(b)** illustrate exemplary execution of the VPCOMPRESSBIT instruction. A first source 501 and a second source 503 hold packed data values in a plurality of packed data elements (data elements 0 to N). In this example, both of these sources are vector registers with a plurality of packed data elements. However, one or more of these sources may also be a memory location. The packed data elements of each source are of uniform size and are the same size in both sources. For example, the packed data elements may all be of an 8-bit size (or 16-bit, 32- bit, 64- bit, 128- bit, 256-bit, etc.). The size of each source is also the same between the sources. For example, the sources may be of a 512-bit size (or 16- bit, 32- bit, 64- bit, 128- bit, 256-bit, etc.).

Each packed data element of the second source 503 stores data and each bit position of this data determines whether or not a corresponding bit position in a corresponding packed data element of the destination is to have data written to it. For example, those bit positions set to "1" in the second source mean that corresponding bit positions in the destination will have consecutive data written to them from the first source. Of course the convention of using 1 or 0 as the indicator may be different depending upon the implementation. In the illustrated example, bit positions 0, 1,3, and 5 of the second source indicate that these bit positions of the destination 505 will have consecutive data from the packed data element of the first source written to them. The data is illustrated as S₀, S₁, S₂, S₃.

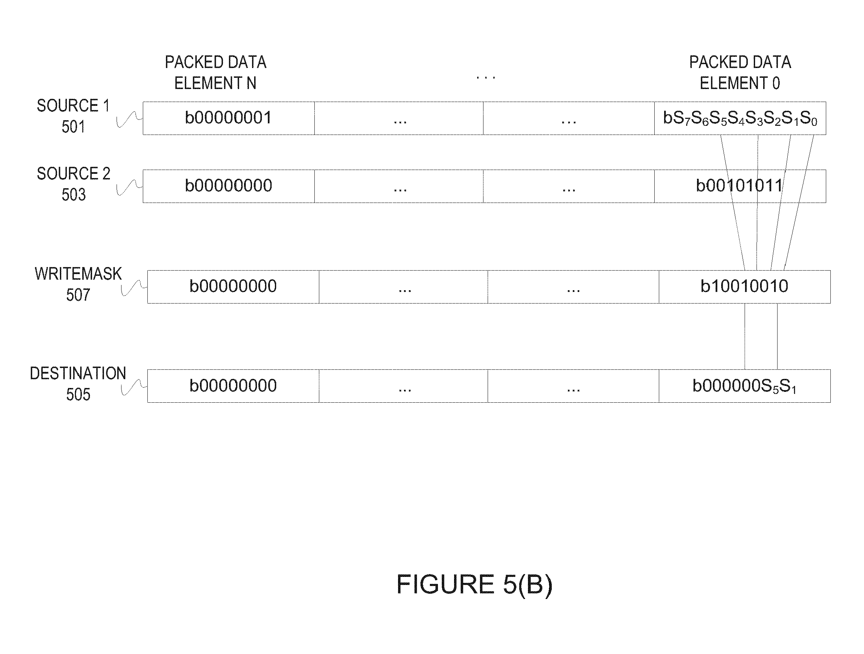

**Figure 5(B)** illustrates a VPCOMPRESSBIT execution where the packed data elements are evaluated using a writemask. The first source 101 and second source 503 are the same as **Figure 5(A)****.** However, which data bits that are written to the destination 505 are subject to writemask 507. In particular, S₀ and S₃ are not written to the destination 505 as the corresponding writemask value is set to 0 while S₁ and S₂ are written.

### Exemplary Format of VPCOMPRESSBIT

An exemplary format of this instruction is "VPCOMPRESSBIT {k} DEST, SOURCE 1, SOURCE 2" where the all of the operands are registers. In most embodiments, the registers are vector registers storing a plurality of packed data operands. These registers may be of any size including, but not limited to, 8-, 16-, 32-, 64-, 128-, 256-, and 512-bit. However, the DEST register is typically smaller than the source registers (8-, 16-, 32-, or 64-bit). Additionally, in some embodiments, one or more of the source operands is a memory location. The opcode (VPCOMPRESSBIT) may also be used to indicate the size of the of the data elements. For example, VPCOMPRESSBITB would indicate byte sized packed data elements, etc. K is an optional writemask register to be used for selective writing to the destination. Additionally, when not operating on bit values the opcode will so indicate (e.g., VPEXPANDBYTE, VPEXPANDWORD, etc.)

### Exemplary Methods of Execution of VPCOMPRESSBIT

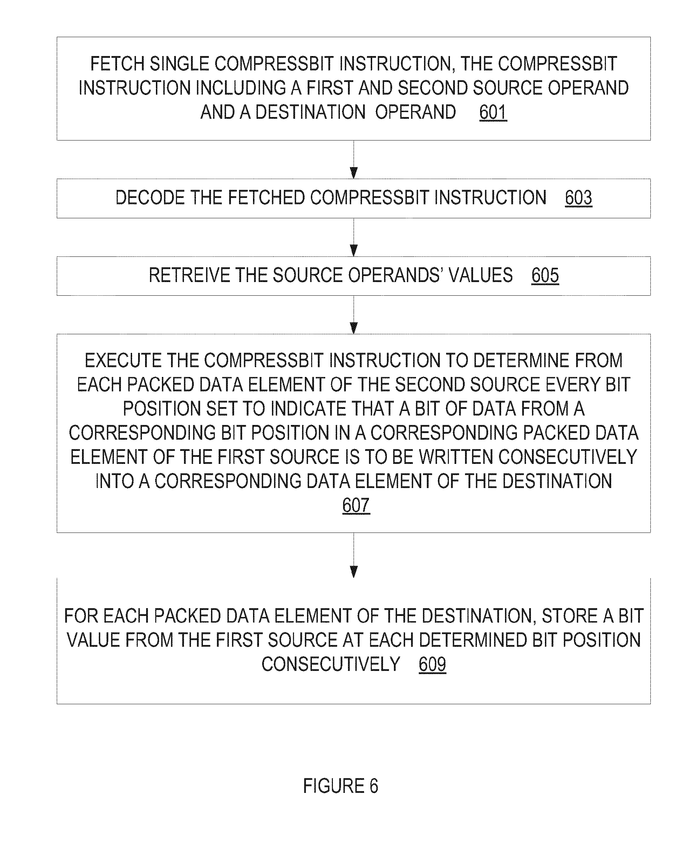

**Figure 6** illustrates an embodiment of the execution of a VPCOMPRESSBIT instruction in a processor by one or more functional units. While the below is written from the perspective of bit positions, other sizes may be used such as byte, word, doubleword, quadword, etc. as illustrated in **Figure 5(C)**. A VPCOMPRESSBIT instruction with a first and second source operand, a destination register operand, and an opcode is fetched at 601.

The VPCOMPRESSBIT instruction is decoded by decoding logic at 603.

The source operands' values are retrieved/read at 605. For example, the source registers and/or memory locations are read.

The decoded VPCOMPRESSBIT instruction (or operations comprising such an instruction such as microoperations) is executed by execution resources such as one or more functional units at 607 to a determine from each packed data element of a second source which bit positions are set to indicate that a bit of data from a corresponding bit position in a corresponding packed data element of the first source is to be written consecutively into a corresponding data element of the destination. An example of this was illustrated in **Figure 5****.**

For each packed data element of the destination, a bit value is stored from the first source at each determined bit position consecutively at 609. This may be performed, for example, by execution logic, writeback logic, etc.

While 607 and 609 have been illustrated separately, in some embodiments they are performed together as a part of the execution of the instruction.

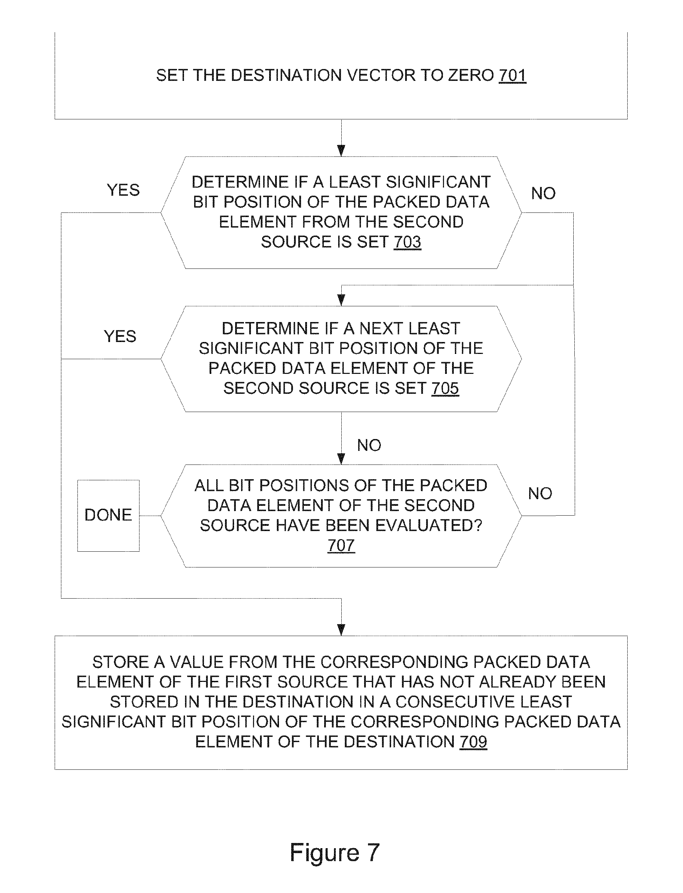

**Figure 7** illustrates an embodiment of a method for processing a VPCOMPRESSBIT instruction. Again, this is written from the perspective of bit evaluation, however, larger sizes may be used. In this embodiment it is assumed that some, if not all, of the operations 601- 605 have been performed earlier, however, they are not shown in order to not obscure the details presented below. For example, the fetching and decoding are not shown, nor is the operand retrieval shown. In this example, only one packed data element is processed for simplicity. In some embodiments, all packed data elements are processed in parallel and in others packed data elements are processed serially.

At 701, the destination is set to zero. In embodiments where the destination is a vector register, the packed data element of the register is set to zero.

At 703, a determination of if a least significant bit position of the packed data element of the second source is set is made. In embodiments, where data elements are processed in a serial fashion, this determination is usually made on the least significant packed data element. Looking back at **Figure 5****,** the least significant bit position (position 0) was set.

When the bit position is not set, a determination of if the next least significant bit position of the packed data element of the second source is set is made at 705. When the bit position is set, in either of 703 and 705, a value from a corresponding packed data element of the first source that has not already been stored in the destination in a consecutive least significant bit position of the corresponding packed data element of the destination is stored at 709. For example, in **Figure 5****,** S₀ is stored in the least significant bit position of the packed data element of the destination 505 because that bit position is the least significant bit position set in the corresponding packed data element of the second source and comes from the least significant bit position of the corresponding packed data element of the first source.

A determination of if all of the bit positions of the packed data element of the second source have been evaluated is made at 707. If not, then the determination of 705 is made. If yes, then the method is done. In embodiments where each packed data element is processed serially, the next least significant data element is evaluated until all packed data elements have been evaluated. Of course, in some embodiments, the most significant packed data element is looked at first, etc. In embodiments where each packed data element is evaluated in parallel one or more of 703-709 is performed at the same time.

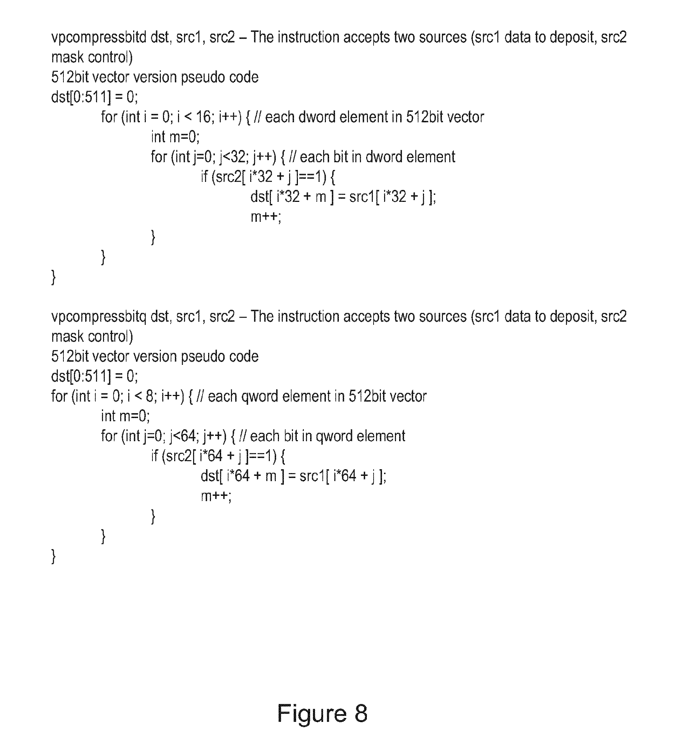

Figure 8 illustrates exemplary pseudo-code for executing VPCOMPRESSBIT. While the above has been described with respect to a VPCOMPRESSBIT instruction, the code sequences above may be performed by multiple instructions in processors that do not support VPCOMPRESSBIT.

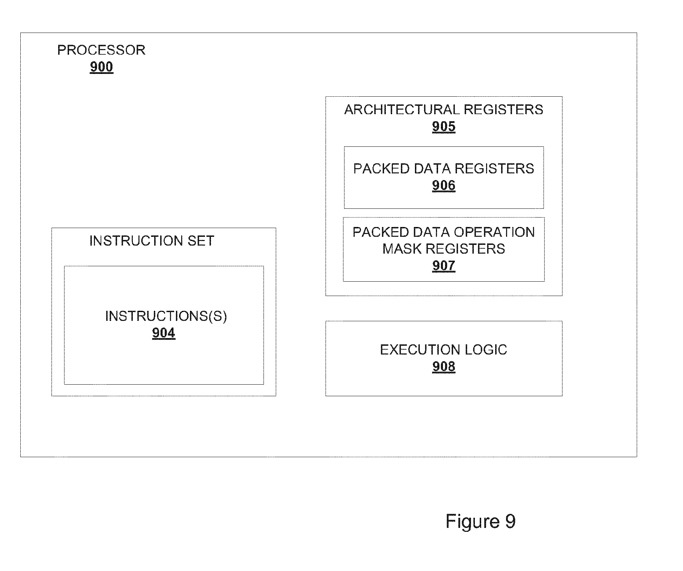

**Figure 9** is a block diagram of an exemplary embodiment of a processor (processor core) 900 to execute one or more VPEXPANDBIT or VPCOMPRESSBIT instructions 904. In some embodiments, the processor may be a general-purpose processor (e.g., of the type used in desktop, laptop, servers, and like computers). Alternatively, the processor may be a special-purpose processor. Examples of suitable special-purpose processors include, but are not limited to, network processors, communications processors, cryptographic processors, graphics processors, co-processors, embedded processors, digital signal processors (DSPs), and controllers, to name just a few examples. The processor may be any of various complex instruction set computing (CISC) processors, various reduced instruction set computing (RISC) processors, various very long instruction word (VLIW) processors, various hybrids thereof, or other types of processors entirely.

The processor 900 includes architecturally-visible registers (e.g., an architectural register file) 905. The architectural registers may also be referred to herein simply as registers. Unless otherwise specified or apparent, the phrases architectural register, register file, and register are used herein to refer to registers that are visible to the software and/or programmer and/or the registers that are specified by macroinstructions or assembly language instructions to identify operands. These registers are contrasted to other non- architectural or non-architecturally visible registers in a given microarchitecture (e.g., temporary registers used by instructions, reorder buffers, retirement registers, etc.). The registers generally represent on-die processor storage locations. The illustrated architectural registers include packed data registers 906. Each of the packed data registers may be operable to store packed or vector data. The illustrated architectural registers may also include packed data operation mask registers 907. Each of the packed data operation mask registers may be operable to store a packed data operation mask. These registers may be referred to as writemask registers in this description. Active bits (for example those set to 1) in writemask registers conditionally control per-element computational operation and updating of result to the destination operand. As a predicate operand, the writemask registers contain one bit to govern the operation/update to each data element of a vector register. In some embodiments, writemasking is supported for instructions with a all data sizes: byte (int8), word (int16), single precision floating-point (float32), integer doubleword(int32), double precision floating-point (float64), integer quadword (int64), etc. Therefore, in some embodiments, a vector register holds either 8, 16, 32 or 64 elements; accordingly, the length of a vector mask register is of size MAX_KL (64 bits currently). In some embodiments, masking is also enabled for all vector length values: 128-bit, 256-bit and 512-bit. Additionally, in some embodiments, each instruction accesses only the number of least significant mask bits needed based on its data type and vector length. Packed data operands may be stored in the packed data registers 907.

The processor also includes execution logic 908. The execution logic is operable to execute or process the one or more VPEXPANDBIT or VPCOMPRESSBIT instructions 904. In some embodiments, the execution logic may include particular logic (e.g., particular circuitry or hardware potentially combined with firmware) to execute these instructions.

### Exemplary Register Architecture

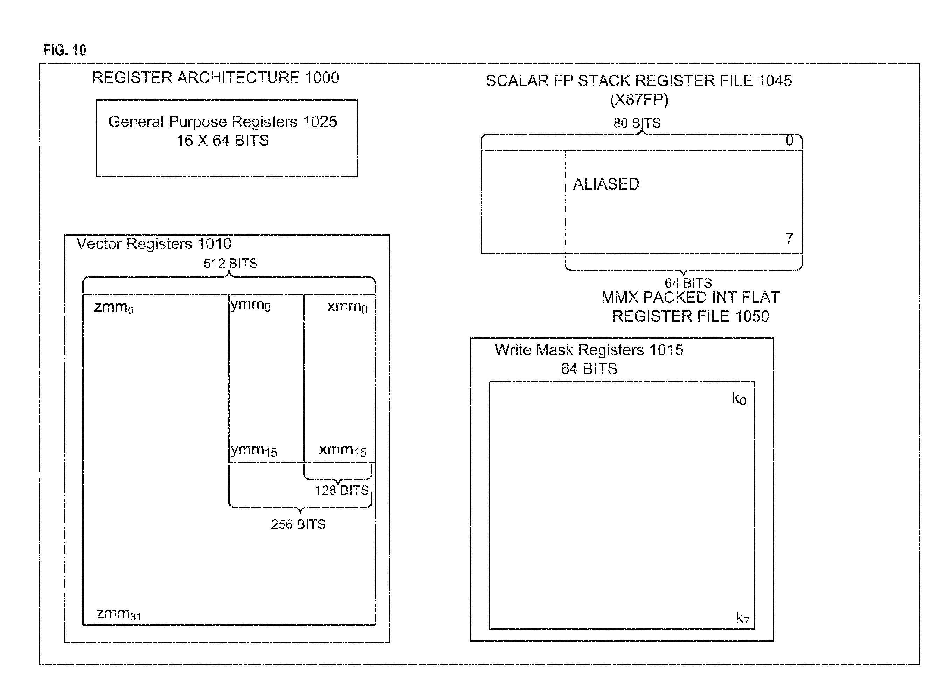

**Figure 10** is a block diagram of a register architecture 1000 according to one embodiment of the invention. In the embodiment illustrated, there are 32 vector registers 1010 that are 512 bits wide; these registers are referenced as zmm0 through zmm31. The lower order 256 bits of the lower 16 zmm registers are overlaid on registers ymm0-16. The lower order 128 bits of the lower 16 zmm registers (the lower order 128 bits of the ymm registers) are overlaid on registers xmm0-15.

Write mask registers 1015 - in the embodiment illustrated, there are 8 write mask registers (k0 through k7), each 64 bits in size. In an alternate embodiment, the write mask registers QAD15 are 16 bits in size. In one embodiment of the invention, the vector mask register k0 cannot be used as a write mask; when the encoding that would normally indicate k0 is used for a write mask, it selects a hardwired write mask of OxFFFF, effectively disabling write masking for that instruction.

General-purpose registers 1025 - in the embodiment illustrated, there are sixteen 64-bit general-purpose registers that are used along with the existing x86 addressing modes to address memory operands. These registers are referenced by the names RAX, RBX, RCX, RDX, RBP, RSI, RDI, RSP, and R8 through R15.

Scalar floating point stack register file (x87 stack) 1045, on which is aliased the MMX packed integer flat register file 1050 - in the embodiment illustrated, the x87 stack is an eight-element stack used to perform scalar floating-point operations on 32/64/80-bit floating point data using the x87 instruction set extension; while the MMX registers are used to perform operations on 64-bit packed integer data, as well as to hold operands for some operations performed between the MMX and XMM registers.

Alternative embodiments of the invention may use wider or narrower registers. Additionally, alternative embodiments of the invention may use more, less, or different register files and registers.

### Exemplary Core Architectures, Processors, and Computer Architectures

Processor cores may be implemented in different ways, for different purposes, and in different processors. For instance, implementations of such cores may include: 1) a general purpose in-order core intended for general-purpose computing; 2) a high performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput). Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip that may include on the same die the described CPU (sometimes referred to as the application core(s) or application processor(s)), the above described coprocessor, and additional functionality. Exemplary core architectures are described next, followed by descriptions of exemplary processors and computer architectures.

### Exemplary Core Architectures

In-order and out-of-order core block diagram

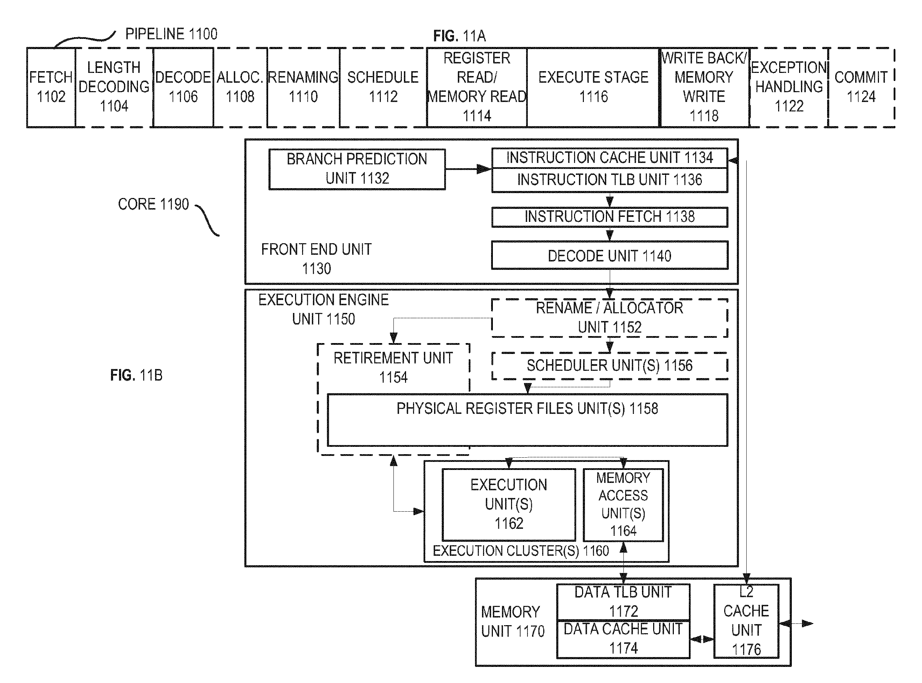

**Figure 11A** is a block diagram illustrating both an exemplary in-order pipeline and an exemplary register renaming, out-of-order issue/execution pipeline according to embodiments of the invention. **Figure 11B** is a block diagram illustrating both an exemplary embodiment of an in-order architecture core and an exemplary register renaming, out-of-order issue/execution architecture core to be included in a processor according to embodiments of the invention. The solid lined boxes in **Figures 11A-B** illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In **Figure 11A,** a processor pipeline 1100 includes a fetch stage 1102, a length decode stage 1104, a decode stage 1106, an allocation stage 1108, a renaming stage 1110, a scheduling (also known as a dispatch or issue) stage 1112, a register read/memory read stage 1114, an execute stage 1116, a write back/memory write stage 1118, an exception handling stage 1122, and a commit stage 1124.

**Figure 11B** shows processor core 1190 including a front end unit 1130 coupled to an execution engine unit 1150, and both are coupled to a memory unit 1170. The core 1190 may be a reduced instruction set computing (RISC) core, a complex instruction set computing (CISC) core, a very long instruction word (VLIW) core, or a hybrid or alternative core type. As yet another option, the core 1190 may be a special-purpose core, such as, for example, a network or communication core, compression engine, coprocessor core, general purpose computing graphics processing unit (GPGPU) core, graphics core, or the like.

The front end unit 1130 includes a branch prediction unit 1132 coupled to an instruction cache unit 1134, which is coupled to an instruction translation lookaside buffer (TLB) 1136, which is coupled to an instruction fetch unit 1138, which is coupled to a decode unit 1140. The decode unit 1140 (or decoder) may decode instructions, and generate as an output one or more micro-operations, micro-code entry points, microinstructions, other instructions, or other control signals, which are decoded from, or which otherwise reflect, or are derived from, the original instructions. The decode unit 1140 may be implemented using various different mechanisms. Examples of suitable mechanisms include, but are not limited to, look-up tables, hardware implementations, programmable logic arrays (PLAs), microcode read only memories (ROMs), etc. In one embodiment, the core 1190 includes a microcode ROM or other medium that stores microcode for certain macroinstructions (e.g., in decode unit 1140 or otherwise within the front end unit 1130). The decode unit 1140 is coupled to a rename/allocator unit 1152 in the execution engine unit 1150.

The execution engine unit 1150 includes the rename/allocator unit 1152 coupled to a retirement unit 1154 and a set of one or more scheduler unit(s) 1156. The scheduler unit(s) 1156 represents any number of different schedulers, including reservations stations, central instruction window, etc. The scheduler unit(s) 1156 is coupled to the physical register file(s) unit(s) 1158. Each of the physical register file(s) units 1158 represents one or more physical register files, different ones of which store one or more different data types, such as scalar integer, scalar floating point, packed integer, packed floating point, vector integer, vector floating point,, status (e.g., an instruction pointer that is the address of the next instruction to be executed), etc. In one embodiment, the physical register file(s) unit 1158 comprises a vector registers unit and a scalar registers unit. These register units may provide architectural vector registers, vector mask registers, and general purpose registers. The physical register file(s) unit(s) 1158 is overlapped by the retirement unit 1154 to illustrate various ways in which register renaming and out-of-order execution may be implemented (e.g., using a reorder buffer(s) and a retirement register file(s); using a future file(s), a history buffer(s), and a retirement register file(s); using a register maps and a pool of registers; etc.). The retirement unit 1154 and the physical register file(s) unit(s) 1158 are coupled to the execution cluster(s) 1160. The execution cluster(s) 1160 includes a set of one or more execution units 1162 and a set of one or more memory access units 1164. The execution units 1162 may perform various operations (e.g., shifts, addition, subtraction, multiplication) and on various types of data (e.g., scalar floating point, packed integer, packed floating point, vector integer, vector floating point). While some embodiments may include a number of execution units dedicated to specific functions or sets of functions, other embodiments may include only one execution unit or multiple execution units that all perform all functions. The scheduler unit(s) 1156, physical register file(s) unit(s) 1158, and execution cluster(s) 1160 are shown as being possibly plural because certain embodiments create separate pipelines for certain types of data/operations (e.g., a scalar integer pipeline, a scalar floating point/packed integer/packed floating point/vector integer/vector floating point pipeline, and/or a memory access pipeline that each have their own scheduler unit, physical register file(s) unit, and/or execution cluster - and in the case of a separate memory access pipeline, certain embodiments are implemented in which only the execution cluster of this pipeline has the memory access unit(s) 1164). It should also be understood that where separate pipelines are used, one or more of these pipelines may be out-of-order issue/execution and the rest in-order.

The set of memory access units 1164 is coupled to the memory unit 1170, which includes a data TLB unit 1172 coupled to a data cache unit 1174 coupled to a level 2 (L2) cache unit 1176. In one exemplary embodiment, the memory access units 1164 may include a load unit, a store address unit, and a store data unit, each of which is coupled to the data TLB unit 1172 in the memory unit 1170. The instruction cache unit 1134 is further coupled to a level 2 (L2) cache unit 1176 in the memory unit 1170. The L2 cache unit 1176 is coupled to one or more other levels of cache and eventually to a main memory.

By way of example, the exemplary register renaming, out-of-order issue/execution core architecture may implement the pipeline 1100 as follows: 1) the instruction fetch 1138 performs the fetch and length decoding stages 1102 and 1104; 2) the decode unit 1140 performs the decode stage 1106; 3) the rename/allocator unit 1152 performs the allocation stage 1108 and renaming stage 1110; 4) the scheduler unit(s) 1156 performs the schedule stage 1112; 5) the physical register file(s) unit(s) 1158 and the memory unit 1170 perform the register read/memory read stage 1114; the execution cluster 1160 perform the execute stage 1116; 6) the memory unit 1170 and the physical register file(s) unit(s) 1158 perform the write back/memory write stage 1118; 7) various units may be involved in the exception handling stage 1122; and 8) the retirement unit 1154 and the physical register file(s) unit(s) 1158 perform the commit stage 1124.

The core 1190 may support one or more instructions sets (e.g., the x86 instruction set (with some extensions that have been added with newer versions); the MIPS instruction set of MIPS Technologies of Sunnyvale, CA; the ARM instruction set (with optional additional extensions such as NEON) of ARM Holdings of Sunnyvale, CA), including the instruction(s) described herein. In one embodiment, the core 1190 includes logic to support a packed data instruction set extension (e.g., AVX1, AVX2, and/or some form of the generic vector friendly instruction format (U=0 and/or U=1) previously described), thereby allowing the operations used by many multimedia applications to be performed using packed data.

It should be understood that the core may support multithreading (executing two or more parallel sets of operations or threads), and may do so in a variety of ways including time sliced multithreading, simultaneous multithreading (where a single physical core provides a logical core for each of the threads that physical core is simultaneously multithreading), or a combination thereof (e.g., time sliced fetching and decoding and simultaneous multithreading thereafter such as in the Intel® Hyperthreading technology).

While register renaming is described in the context of out-of-order execution, it should be understood that register renaming may be used in an in-order architecture. While the illustrated embodiment of the processor also includes separate instruction and data cache units 1134/1174 and a shared L2 cache unit 1176, alternative embodiments may have a single internal cache for both instructions and data, such as, for example, a Level 1 (L1) internal cache, or multiple levels of internal cache. In some embodiments, the system may include a combination of an internal cache and an external cache that is external to the core and/or the processor. Alternatively, all of the cache may be external to the core and/or the processor.

### Specific Exemplary In-Order Core Architecture

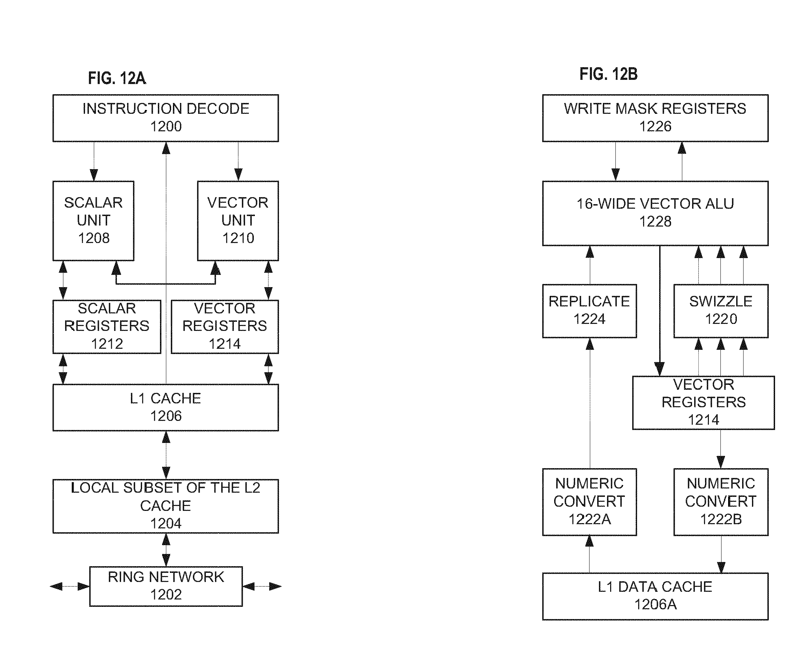

**Figures 12A-B** illustrate a block diagram of a more specific exemplary in-order core architecture, which core would be one of several logic blocks (including other cores of the same type and/or different types) in a chip. The logic blocks communicate through a high-bandwidth interconnect network (e.g., a ring network) with some fixed function logic, memory I/O interfaces, and other necessary I/O logic, depending on the application.

**Figure 12A** is a block diagram of a single processor core, along with its connection to the on-die interconnect network 1202 and with its local subset of the Level 2 (L2) cache 1204, according to embodiments of the invention. In one embodiment, an instruction decoder 1200 supports the x86 instruction set with a packed data instruction set extension. An L1 cache 1206 allows low-latency accesses to cache memory into the scalar and vector units. While in one embodiment (to simplify the design), a scalar unit 1208 and a vector unit 1210 use separate register sets (respectively, scalar registers 1212 and vector registers 1214) and data transferred between them is written to memory and then read back in from a level 1 (L1) cache 1206, alternative embodiments of the invention may use a different approach (e.g., use a single register set or include a communication path that allow data to be transferred between the two register files without being written and read back).

The local subset of the L2 cache 1204 is part of a global L2 cache that is divided into separate local subsets, one per processor core. Each processor core has a direct access path to its own local subset of the L2 cache 1204. Data read by a processor core is stored in its L2 cache subset 1204 and can be accessed quickly, in parallel with other processor cores accessing their own local L2 cache subsets. Data written by a processor core is stored in its own L2 cache subset 1204 and is flushed from other subsets, if necessary. The ring network ensures coherency for shared data. The ring network is bi-directional to allow agents such as processor cores, L2 caches and other logic blocks to communicate with each other within the chip. Each ring data-path is 1012-bits wide per direction.

**Figure 12B** is an expanded view of part of the processor core in **Figure 12A** according to embodiments of the invention. **Figure 12B** includes an L1 data cache 1206A part of the L1 cache 1204, as well as more detail regarding the vector unit 1210 and the vector registers 1214. Specifically, the vector unit 1210 is a 16-wide vector processing unit (VPU) (see the 16-wide ALU 1228), which executes one or more of integer, single-precision float, and double-precision float instructions. The VPU supports swizzling the register inputs with swizzle unit 1220, numeric conversion with numeric convert units 1222A-B, and replication with replication unit 1224 on the memory input.

### Processor with integrated memory controller and graphics

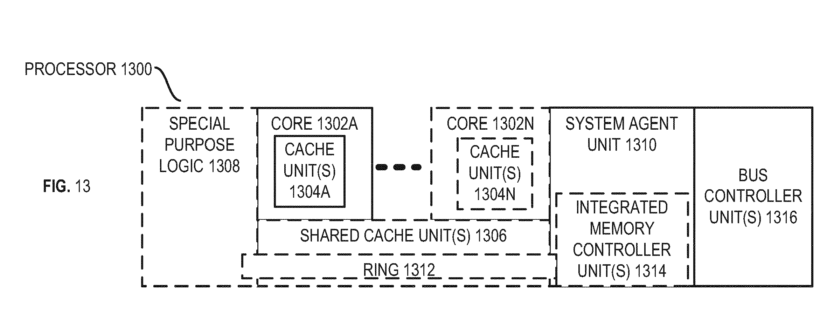

**Figure 13** is a block diagram of a processor 1300 that may have more than one core, may have an integrated memory controller, and may have integrated graphics according to embodiments of the invention. The solid lined boxes in **Figure 13** illustrate a processor 1300 with a single core 1302A, a system agent 1310, a set of one or more bus controller units 1316, while the optional addition of the dashed lined boxes illustrates an alternative processor 1300 with multiple cores 1302A-N, a set of one or more integrated memory controller unit(s) 1314 in the system agent unit 1310, and special purpose logic 1308.

Thus, different implementations of the processor 1300 may include: 1) a CPU with the special purpose logic 1308 being integrated graphics and/or scientific (throughput) logic (which may include one or more cores), and the cores 1302A-N being one or more general purpose cores (e.g., general purpose in-order cores, general purpose out-of-order cores, a combination of the two); 2) a coprocessor with the cores 1302A-N being a large number of special purpose cores intended primarily for graphics and/or scientific (throughput); and 3) a coprocessor with the cores 1302A-N being a large number of general purpose in-order cores. Thus, the processor 1300 may be a general-purpose processor, coprocessor or special-purpose processor, such as, for example, a network or communication processor, compression engine, graphics processor, GPGPU (general purpose graphics processing unit), a high-throughput many integrated core (MIC) coprocessor (including 30 or more cores), embedded processor, or the like. The processor may be implemented on one or more chips. The processor 1300 may be a part of and/or may be implemented on one or more substrates using any of a number of process technologies, such as, for example, BiCMOS, CMOS, or NMOS.

The memory hierarchy includes one or more levels of cache within the cores, a set or one or more shared cache units 1306, and external memory (not shown) coupled to the set of integrated memory controller units 1314. The set of shared cache units 1306 may include one or more mid-level caches, such as level 2 (L2), level 3 (L3), level 4 (L4), or other levels of cache, a last level cache (LLC), and/or combinations thereof. While in one embodiment a ring based interconnect unit 1312 interconnects the integrated graphics logic 1308, the set of shared cache units 1306, and the system agent unit 1310/integrated memory controller unit(s) 1314, alternative embodiments may use any number of well-known techniques for interconnecting such units. In one embodiment, coherency is maintained between one or more cache units 1306 and cores 1302-A-N.

In some embodiments, one or more of the cores 1302A-N are capable of multi-threading. The system agent 1310 includes those components coordinating and operating cores 1302A-N. The system agent unit 1310 may include for example a power control unit (PCU) and a display unit. The PCU may be or include logic and components needed for regulating the power state of the cores 1302A-N and the integrated graphics logic 1308. The display unit is for driving one or more externally connected displays.

The cores 1302A-N may be homogenous or heterogeneous in terms of architecture instruction set; that is, two or more of the cores 1302A-N may be capable of execution the same instruction set, while others may be capable of executing only a subset of that instruction set or a different instruction set.

### Exemplary Computer Architectures

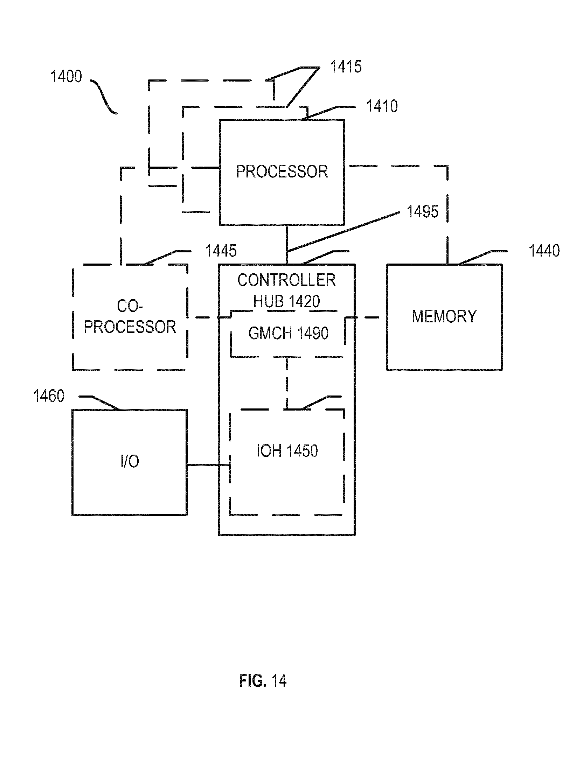

**Figures 14-17** are block diagrams of exemplary computer architectures. Other system designs and configurations known in the arts for laptops, desktops, handheld PCs, personal digital assistants, engineering workstations, servers, network devices, network hubs, switches, embedded processors, digital signal processors (DSPs), graphics devices, video game devices, set-top boxes, micro controllers, cell phones, portable media players, hand held devices, and various other electronic devices, are also suitable. In general, a huge variety of systems or electronic devices capable of incorporating a processor and/or other execution logic as disclosed herein are generally suitable.

Referring now to **Figure 14****,** shown is a block diagram of a system 1400 in accordance with one embodiment of the present invention. The system 1400 may include one or more processors 1410, 1415, which are coupled to a controller hub 1420. In one embodiment the controller hub 1420 includes a graphics memory controller hub (GMCH) 1490 and an Input/Output Hub (IOH) 1450 (which may be on separate chips); the GMCH 1490 includes memory and graphics controllers to which are coupled memory 1440 and a coprocessor 1445; the IOH 1450 is couples input/output (I/O) devices 1460 to the GMCH 1490. Alternatively, one or both of the memory and graphics controllers are integrated within the processor (as described herein), the memory 1440 and the coprocessor 1445 are coupled directly to the processor 1410, and the controller hub 1420 in a single chip with the IOH 1450.

The optional nature of additional processors 1415 is denoted in **Figure 14** with broken lines. Each processor 1410, 1415 may include one or more of the processing cores described herein and may be some version of the processor 1300.

The memory 1440 may be, for example, dynamic random access memory (DRAM), phase change memory (PCM), or a combination of the two. For at least one embodiment, the controller hub 1420 communicates with the processor(s) 1410, 1415 via a multi-drop bus, such as a frontside bus (FSB), point-to-point interface such as QuickPath Interconnect (QPI), or similar connection 1495.

In one embodiment, the coprocessor 1445 is a special-purpose processor, such as, for example, a high-throughput MIC processor, a network or communication processor, compression engine, graphics processor, GPGPU, embedded processor, or the like. In one embodiment, controller hub 1420 may include an integrated graphics accelerator.

There can be a variety of differences between the physical resources 1410, 1415 in terms of a spectrum of metrics of merit including architectural, microarchitectural, thermal, power consumption characteristics, and the like.

In one embodiment, the processor 1410 executes instructions that control data processing operations of a general type. Embedded within the instructions may be coprocessor instructions. The processor 1410 recognizes these coprocessor instructions as being of a type that should be executed by the attached coprocessor 1445. Accordingly, the processor 1410 issues these coprocessor instructions (or control signals representing coprocessor instructions) on a coprocessor bus or other interconnect, to coprocessor 1445. Coprocessor(s) 1445 accept and execute the received coprocessor instructions.

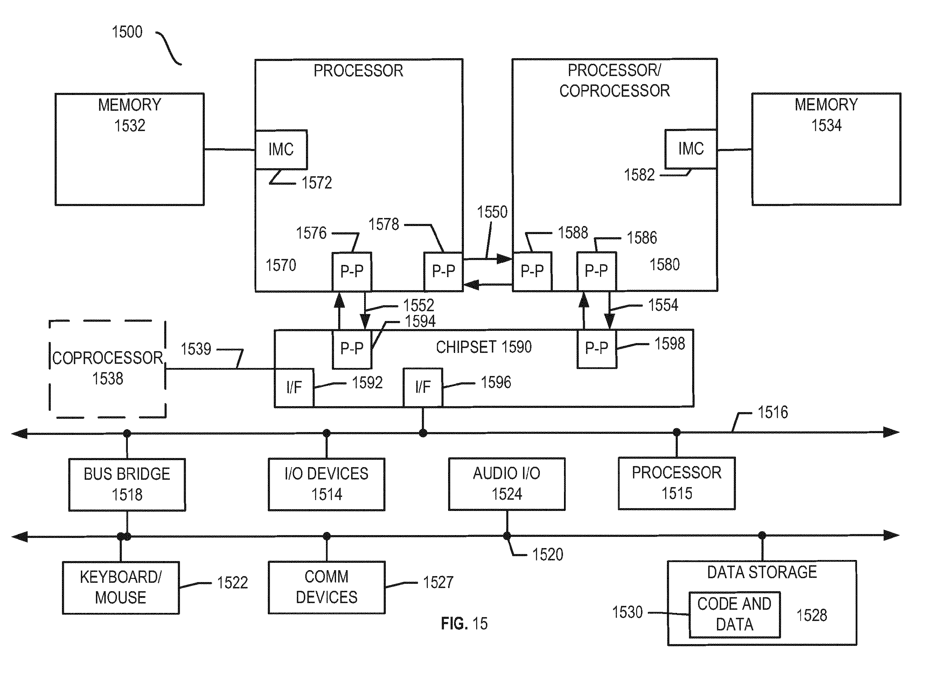

Referring now to **Figure 15****,** shown is a block diagram of a first more specific exemplary system 1500 in accordance with an embodiment of the present invention. As shown in **Figure 15****,** multiprocessor system 1500 is a point-to-point interconnect system, and includes a first processor 1570 and a second processor 1580 coupled via a point-to-point interconnect 1550. Each of processors 1570 and 1580 may be some version of the processor 1300. In one embodiment of the invention, processors 1570 and 1580 are respectively processors 1410 and 1415, while coprocessor 1538 is coprocessor 1445. In another embodiment, processors 1570 and 1580 are respectively processor 1410 coprocessor 1445.

Processors 1570 and 1580 are shown including integrated memory controller (IMC) units 1572 and 1582, respectively. Processor 1570 also includes as part of its bus controller units point-to-point (P-P) interfaces 1576 and 1578; similarly, second processor 1580 includes P-P interfaces 1586 and 1588. Processors 1570, 1580 may exchange information via a point-to-point (P-P) interface 1550 using P-P interface circuits 1578, 1588. As shown in **Figure 15****,** IMCs 1572 and 1582 couple the processors to respective memories, namely a memory 1532 and a memory 1534, which may be portions of main memory locally attached to the respective processors.

Processors 1570, 1580 may each exchange information with a chipset 1590 via individual P-P interfaces 1552, 1554 using point to point interface circuits 1576, 1594, 1586, 1598. Chipset 1590 may optionally exchange information with the coprocessor 1538 via a high-performance interface 1539. In one embodiment, the coprocessor 1538 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1590 may be coupled to a first bus 1516 via an interface 1596. In one embodiment, first bus 1516 may be a Peripheral Component Interconnect (PCI) bus, or a bus such as a PCI Express bus or another third generation I/O interconnect bus, although the scope of the present invention is not so limited.

As shown in **Figure 15****,** various I/O devices 1514 may be coupled to first bus 1516, along with a bus bridge 1518 which couples first bus 1516 to a second bus 1520. In one embodiment, one or more additional processor(s) 1515, such as coprocessors, high-throughput MIC processors, GPGPU's, accelerators (such as, e.g., graphics accelerators or digital signal processing (DSP) units), field programmable gate arrays, or any other processor, are coupled to first bus 1516. In one embodiment, second bus 1520 may be a low pin count (LPC) bus. Various devices may be coupled to a second bus 1520 including, for example, a keyboard and/or mouse 1522, communication devices 1527 and a storage unit 1528 such as a disk drive or other mass storage device which may include instructions/code and data 1530, in one embodiment. Further, an audio I/O 1524 may be coupled to the second bus 1520. Note that other architectures are possible. For example, instead of the point-to-point architecture of **Figure 15****,** a system may implement a multi-drop bus or other such architecture.

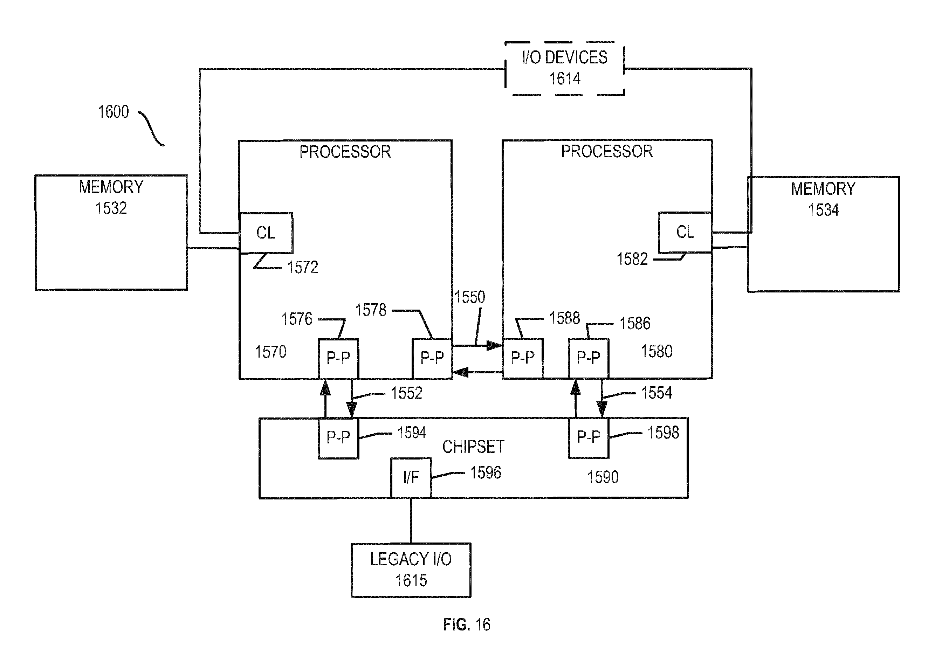

Referring now to **Figure 16****,** shown is a block diagram of a second more specific exemplary system 1600 in accordance with an embodiment of the present invention. Like elements in **Figures 15** and **16** bear like reference numerals, and certain aspects of **Figure 15** have been omitted from **Figure 16** in order to avoid obscuring other aspects of **Figure 16****.**
**Figure 16** illustrates that the processors 1570, 1580 may include integrated memory and I/O control logic ("CL") 1572 and 1582, respectively. Thus, the CL 1572, 1582 include integrated memory controller units and include I/O control logic. **Figure 16** illustrates that not only are the memories 1532, 1534 coupled to the CL 1572, 1582, but also that I/O devices 1614 are also coupled to the control logic 1572, 1582. Legacy I/O devices 1615 are coupled to the chipset 1590.

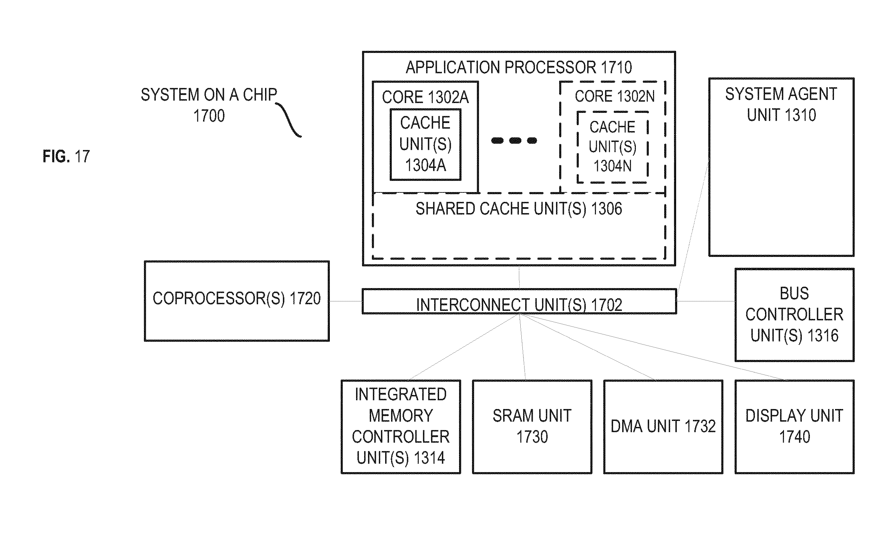

Referring now to **Figure 17****,** shown is a block diagram of a SoC 1700 in accordance with an embodiment of the present invention. Similar elements in **Figure 13** bear like reference numerals. Also, dashed lined boxes are optional features on more advanced SoCs. In **Figure 17****,** an interconnect unit(s) 1702 is coupled to: an application processor 1710 which includes a set of one or more cores 202A-N and shared cache unit(s) 1306; a system agent unit 1310; a bus controller unit(s) 1316; an integrated memory controller unit(s) 1314; a set or one or more coprocessors 1720 which may include integrated graphics logic, an image processor, an audio processor, and a video processor; an static random access memory (SRAM) unit 1730; a direct memory access (DMA) unit 1732; and a display unit 1740 for coupling to one or more external displays. In one embodiment, the coprocessor(s) 1720 include a special-purpose processor, such as, for example, a network or communication processor, compression engine, GPGPU, a high-throughput MIC processor, embedded processor, or the like.

Embodiments of the mechanisms disclosed herein may be implemented in hardware, software, firmware, or a combination of such implementation approaches. Embodiments of the invention may be implemented as computer programs or program code executing on programmable systems comprising at least one processor, a storage system (including volatile and non-volatile memory and/or storage elements), at least one input device, and at least one output device.

Program code, such as code 1530 illustrated in **Figure 15****,** may be applied to input instructions to perform the functions described herein and generate output information. The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The program code may be implemented in a high level procedural or object oriented programming language to communicate with a processing system. The program code may also be implemented in assembly or machine language, if desired. In fact, the mechanisms described herein are not limited in scope to any particular programming language. In any case, the language may be a compiled or interpreted language.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, embodiments of the invention also include non-transitory, tangible machine-readable media containing instructions or containing design data, such as Hardware Description Language (HDL), which defines structures, circuits, apparatuses, processors and/or system features described herein. Such embodiments may also be referred to as program products.

### Emulation (including binary translation, code morphine, etc.)

In some cases, an instruction converter may be used to convert an instruction from a source instruction set to a target instruction set. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

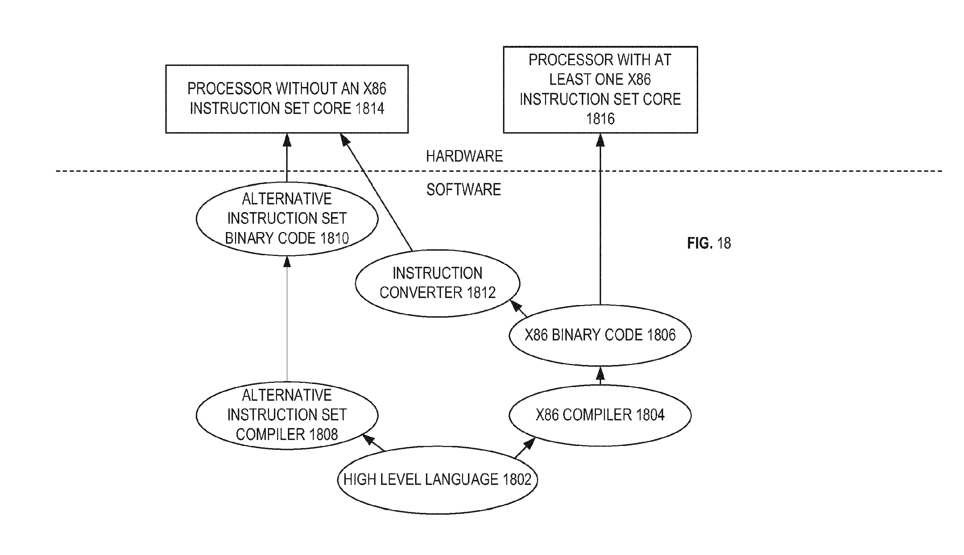

**Figure 18** is a block diagram contrasting the use of a software instruction converter to convert binary instructions in a source instruction set to binary instructions in a target instruction set according to embodiments of the invention. In the illustrated embodiment, the instruction converter is a software instruction converter, although alternatively the instruction converter may be implemented in software, firmware, hardware, or various combinations thereof. **Figure 18** shows a program in a high level language 1802 may be compiled using an x86 compiler 1804 to generate x86 binary code 1806 that may be natively executed by a processor with at least one x86 instruction set core 1816. The processor with at least one x86 instruction set core 1816 represents any processor that can perform substantially the same functions as an Intel processor with at least one x86 instruction set core by compatibly executing or otherwise processing (1) a substantial portion of the instruction set of the Intel x86 instruction set core or (2) object code versions of applications or other software targeted to run on an Intel processor with at least one x86 instruction set core, in order to achieve substantially the same result as an Intel processor with at least one x86 instruction set core. The x86 compiler 1804 represents a compiler that is operable to generate x86 binary code 1806 (e.g., object code) that can, with or without additional linkage processing, be executed on the processor with at least one x86 instruction set core 1816. Similarly, **Figure 18** shows the program in the high level language 1802 may be compiled using an alternative instruction set compiler 1808 to generate alternative instruction set binary code 1810 that may be natively executed by a processor without at least one x86 instruction set core 1814 (e.g., a processor with cores that execute the MIPS instruction set of MIPS Technologies of Sunnyvale, CA and/or that execute the ARM instruction set of ARM Holdings of Sunnyvale, CA). The instruction converter 1812 is used to convert the x86 binary code 1806 into code that may be natively executed by the processor without an x86 instruction set core 1814. This converted code is not likely to be the same as the alternative instruction set binary code 1810 because an instruction converter capable of this is difficult to make; however, the converted code will accomplish the general operation and be made up of instructions from the alternative instruction set. Thus, the instruction converter 1812 represents software, firmware, hardware, or a combination thereof that, through emulation, simulation or any other process, allows a processor or other electronic device that does not have an x86 instruction set processor or core to execute the x86 binary code 1806.

## Claims

1. An apparatus comprising:
decode logic means for decoding a vector expand (VPEXPANDBIT) instruction, the VPEXPANDBIT instruction including a first source operand, a second source operand, and a destination operand; and
execution means for
determining from each packed data element of the second source operand every bit position that has been set to indicate that a bit of data from a corresponding packed data element of the first source operand is to be written into a corresponding bit position in a packed data element of the destination operand, wherein the bits of data to be written in the destination packed data element are consecutive bits from the packed data element of the first source operand, and
storing consecutive bit values from each packed data element of the first source at the identified bit positions of a corresponding packed data element of the destination.

2. The apparatus of claim 1, wherein the first source operand, second source operand, and destination operand are packed data registers.

3. The apparatus of any of claims 1-2, wherein the opcode of the VPEXPANDBIT instruction determines a size of each packed data element.

4. The apparatus of any of claims 1-3, wherein a "1" value in a bit position indicates that a bit of data from a corresponding packed data element of the first source operand is to be written into a corresponding bit position in a packed data element of the destination operand.

5. The apparatus of any of claims 1-4, wherein the least significant bit values from each packed data element of the first source at the identified bit positions of a packed data element of the destination are stored.

6. The apparatus of any of claims 1-5, wherein the logic is to determine from each packed data element of the second source operand in parallel every bit position that has been set to indicate that a bit of data from a corresponding packed data element of the first source operand is to be written into a corresponding bit position in a packed data element of the destination operand.

7. The apparatus of any of claims 1-6, wherein the logic to store in parallel consecutive bit values from each packed data element of the first source at the identified bit positions of a packed data element of the destination.

8. The apparatus of any of claims 1-5, wherein the logic is to determine from each packed data element of the second source operand in series every bit position that has been set to indicate that a bit of data from a corresponding packed data element of the first source operand is to be written into a corresponding bit position in a packed data element of the destination operand.

9. A method comprising:
decoding a vector expand (VPEXPANDBIT) instruction, the VPEXPANDBIT instruction including a first source operand, a second source operand, and a destination operand;
executing the decoded VPEXPANDBIT instruction by determining from each packed data element of the second source operand every bit position that has been set to indicate that a bit of data from a corresponding packed data element of the first source operand is to be written into a corresponding bit position in a packed data element of the destination operand, wherein the bits of data to be written in the destination packed data element are consecutive bits from the packed data element of the first source operand;
storing consecutive bit values from each packed data element of the first source at the identified bit positions of a corresponding packed data element of the destination.

10. The method of claim 9, wherein the first source operand, second source operand, and destination operand are packed data registers.

11. The method of any of claims 9-10, wherein the opcode of the VPEXPANDBIT instruction determines a size of each packed data element.

12. The method of any of claims 9-11, wherein a "1" value in a bit position indicates that a bit of data from a corresponding packed data element of the first source operand is to be written into a corresponding bit position in a packed data element of the destination operand.

13. The method of any of claims 9-12, wherein the least significant bit values from each packed data element of the first source at the identified bit positions of a packed data element of the destination are stored.

14. The method of any of claims 9-13, wherein the logic is to determine from each packed data element of the second source operand in parallel every bit position that has been set to indicate that a bit of data from a corresponding packed data element of the first source operand is to be written into a corresponding bit position in a packed data element of the destination operand.

15. The method of any of claims 9-14, wherein the logic to store in parallel consecutive bit values from each packed data element of the first source at the identified bit positions of a packed data element of the destination.
